# EUROPEAN PATENT APPLICATION

(11) **EP 4 678 778 A1**
(43) Date of publication of application: **14.01.2026**
(21) Application number: 23943075.4
(22) Date of filing: 07.07.2023
(51) Int. Cl.: C22C 38/42, C22C 38/44, C22C 33/04, C21C 5/28, C21C 7/06, C21C 7/10

(54) **PRODUCTION AND PREPARATION METHOD OF CONVERTER PROCESS CARBURIZING GEAR SHAFT BAR**

(30) Priority: 30.06.2023 CN 202310795398
(71) Applicant: Bengang Steel Plates Co., Ltd., Benxi, Liaoning 117022 (CN)
(72) Inventor: ZHANG, Qun, Benxi, Liaoning 117022 (CN); LU, Bingjun, Benxi, Liaoning 117022 (CN); ZHAO, Qianshui, Benxi, Liaoning 117022 (CN); WANG, Deyong, Benxi, Liaoning 117022 (CN); KAN, Kai, Benxi, Liaoning 117022 (CN)
(74) Representative: Murgitroyd & Company
(86) International application number: PCT/CN2023/106258
(87) International publication number: WO 2025/000587

(57) **Abstract**

A production and preparation method of a steel bar for a converter process carburized gear shaft, the chemical composition of the bar is C: 0.18% to 0.22%, Si: 0.20% to 0.30%, Mn: 0.50% to 0.60%, P: <0.015%, S: <0.008%, Cr: 1.35% to 1.45%, Ni:13.30% to 3.40%, Cu: S0.05%, Mo: <0.05%, Alt: 0.025% to 0.035%, and the remainder is iron and unavoidable impurities. A process of converter smelting→LF refining→RH vacuum degassing→continuous casting→heating process-rolling process is adopted to ensure the mechanical properties, high hardness, and high steel purity of the finished steel for carburized gear shaft, and also ensure the surface quality level of the steel for carburized gear shaft.

## Description

### TECHNICAL FIELD

The present invention relates to the field of special steel, in particular to a method for producing and preparing steel bars for converter process carburized gear shafts.

### BACKGROUND ART

Gear shafts are a mechanical component that supports rotatable parts and rotates with them to transmit motion, torque or bending moment. Harsh working environments impose extremely strict requirements on the comprehensive performance of gear shaft steel, such as wear resistance and fatigue life. As a critical component of transmission systems, gear shafts have strict quality requirements.

The quality of gear shaft steel impacts the service life and wear resistance of transmission system, and even determines the operational safety of the entire drive assembly.

Therefore, it is necessary to develop carburized gear shaft steel with excellent mechanical properties, high hardness, and high steel purity to meet the requirements of high-end products.

### SUMMARY

An object of the present invention is to provide a method for producing a 20Cr2Ni4A steel bar for carburized gear shafts. The method adopts the processes of converter smelting, LF refining, RH refining, and continuous casting to produce and manufacture 20Cr2Ni4A steel bars for carburized gear shafts, meeting high-end application requirements. The method achieves a breakthrough in mass production of 20Cr2Ni4A steel bars for carburized gear shafts by means of a converter continuous casting process, which not only ensures mechanical properties, macrostructure, and high purity of the finished steel bars of 20Cr2Ni4A steel for carburized gear shafts, but also guarantees good surface quality of 20Cr2Ni4A steel for carburized gear shafts.

To achieve the above object, the present invention provides a 20Cr2Ni4A steel bar for carburized gear shafts and a production and preparation method thereof, including composition design and process design. The method including processes of converter smelting, LF refining, RH vacuum degassing, continuous casting, heating, and rolling. The steel bars produced by this method meets the quality requirements of 20Cr2Ni4A steel bar for carburized gear shafts, with the mechanical properties, high hardness, and high purity meeting standard requirements.

A 20Cr2Ni4A steel bar for carburized gear shafts is provided, and its internally controlled chemical compositions in percentage by mass are as follows: 0.18-0.22% of C, 0.20-0.30% of Si, 0.50-0.60% of Mn, less than or equal to 0.015% of P, less than or equal to 0.008% of S, 1.35-1.45% of Cr, 3.30-3.40% of Ni, less than or equal to 0.05% of Cu, less than or equal to 0.05% of Mo, 0.025-0.035% of Alt, and the balance of Fe and inevitable impurities.

A method for producing and preparing the abovementioned 20Cr2Ni4A steel bar for carburized gear shafts is also provided, including the processes of converter smelting, secondary refining (LF and RH), continuous casting, heating furnace heating, rolling, and heat preservation.

The converter smelting process uses 27-30% of scrap steel and 70-73% of melted iron by mass fraction as raw materials for smelting. Oxygen is introduced into converter to oxidize with the raw materials for oxidation with intense boiling. A tapping temperature is 1695-1700 °C. The C content of a smelted liquid steel at tapping is 0.10-0.12% and the P content is less than or equal to 0.010%. Auxiliary materials and alloys are added to the liquid steel between one fourth and one third of tapping. Moreover, alloy addition per ton of steel is as follows: 6.4-6.5 Kg/t of silicon manganese, 0.7-0.8 Kg/t of aluminum granules, 36-36.5 Kg/t of nickel plates, and 0.2-0.22 Kg/t of ferrosilicon. Auxiliary material addition per ton of steel is as follows: 29-30 Kg/t of dolomite, 34-35 Kg/t of lime, 18.2-19 Kg/t of limestone, and 6-6.2 Kg/t of sinter.

The LF refining process adopts a high current of 20000-25000 A to heat for slag smelting. When a slag surface in the LF fluctuates while the liquid steel and electric arc remain covered, active lime is supplemented to the liquid steel. After 5 min from addition of the active lime, a first liquid steel sample is taken for analyzing the chemical composition of the steel liquid, and alloys and fluorite are then supplemented to the liquid steel according to target values of the chemical composition. The alloy and fluorite should be introduced to the argon stream to promote their rapid melting and homogenization. When a temperature of the liquid steel reaches 1570-1580 °C, 1-3 Kg of diffusion deoxidizer is added to per ton of steel for diffusion deoxygenation, and the door of the LF is closed for 10-12 min. When the temperature of liquid steel reaches 1620-1630 °C, the second liquid steel sample is taken for analyzing the chemical composition of the liquid steel to determine a deviation of each chemical element's content from the target value. After the second sample is taken away, 1-3 Kg of diffusion deoxidizer is supplemented to per ton of steel for continuous slag adjustment. Supplemented alloy addition per ton of steel is as follows: 7.5-7.7 Kg/t high-carbon ferrochrome, 18.7-19 Kg/t low-carbon ferrochrome, 1.6-1.7 Kg/t of aluminum granules, 1.35-1.42 Kg/t of ferrosilicon, and 1.9-2.0 Kg/t of nickel plates. A slag basicity at pH 2.5-3.5 and a slag viscosity at 0.80-1.20 Pa·s are maintained while white slag refining is continued for 20-30 min. When the temperature of the liquid steel reaches 1630-1640 °C, 0.9-1.0 m of aluminum wire is fed to per ton of steel for final deoxidation. Calm argon blowing is performed to the liquid steel for 10-20 min after the completion of wire feeding. Supplemented auxiliary material addition per ton of steel is as follows: 8.7-9 Kg/t of active lime, and 0.75-0.80 Kg/t of fluorite.

For the RH refining process, an argon pressure in a ladle before a vacuum pump startup is controlled to be 0.1-0.3 MPa to ensure that the slag surface slightly fluctuates while the liquid steel remains covered. When a vacuum degree of a vacuum chamber reaches 100-110 Pa, timing begins for 10-15min, and aluminum granules and high manganese are added to the liquid steel based on the composition of the liquid steel and the target requirement, while the argon pressure is adjusted to 0.3-0.5 MPa. 1.1-1.2 m of silicon-calcium alloy wire is added to per ton of steel after calm argon blowing.

For the continuous casting process, a ladle temperature is 1545-1555 °C, a tundish temperature is 1530-1540 °C, a casting speed is 0.43-0.44 m/min, a hydrogen content in the liquid steel of the tundish is controlled to be less than or equal to 2 ppm, an mold electromagnetic stirring current is 400-420 A, and a final electromagnetic stirring current is 330-350 A with a frequency of 8-9 Hz. A full protective pouring is adopted during the continuous casting, and a medium-carbon steel mold flux is used in mold. Soft reduction is applied to a cast strand at 2nd, 3rd and 4th reduction rolls with reduction amounts of 3-3.2mm, 4-4.2mm and 4-4.2mm, respectively. The cast strand is then cut by means of a combined automatic and manual method, and a cut billet is stacked with hot-steels at the bottom and two furnaces of billets on top to ensure flatness, followed by insulation for 30-40 h.

Based on the abovementioned technical solutions, further, the size of the continuous casting billet is 350 mm*470 mm.

Based on the abovementioned technical solutions, further, for the heating process, the temperature of the continuous casting billet entering the heating furnace is 300-540 °C, and a three-section heating method is adopted. A preheating section takes 0.6-0.8 h to raise the temperature to 650-700 °C followed by holding for 0.3-0.5 h. A heating section 2 takes 0.6-0.8 h to raise the temperature to 850-870 °C followed by holding for 0.5-0.8 h. A heating section 1 takes 0.6-0.8 h to raise the temperature to 1210-1240 °C followed by holding for 1.0-1.2 h. A soaking section takes 0.3-0.5 h to reduce the temperature to 1200-1230 °C followed by holding for 0.8-1.0 h. A tapping temperature is 1180-1210 °C.

Based on the abovementioned technical solutions, further, a specification of the steel bar is Φ35-Φ250 mm, and preferably is Φ200 mm.

Based on the abovementioned technical solutions, further, the rolling process includes rolling by means of blooming mill and continuous rolling mill.

Hot-rolled bars (with a specification of greater than or equal to Φ83 mm): The initial rolling temperature is 1100-1200 °C, and the final rolling temperature is greater than or equal to 850 °C.

Hot-rolled bars (with a specification of less than or equal to Φ82 mm): The initial rolling temperature is 980-1050 °C, and the final rolling temperature is 800-950 °C.
1) Blooming process: a 1150 mm breakdown mill is adopted to perform 7 passes of rolling on the continuous casting billet after heating, with reduction amounts of 60-61 mm in a first pass rolling, 70-71 mm in a second pass rolling, 65-66 mm in a third pass rolling, 56-57 mm in a fourth pass rolling, 65-66 mm in a fifth pass rolling, 71-72 mm in a sixth pass rolling, and 71-72 mm in a seventh pass rolling, followed by making the billet pass through 3 stands of 850 mm rolling mill, 1 stand of 735 mm rolling mill, and an 8-stand continuous rolling mill unit for further rolling.
2) Continuous rolling process to obtain a finished product with a specification of Φ200 mm:
   For big steel bars with a specification of Φ200 mm, 5 passes of rolling is performed on a bloomed intermediate billet with a height of 268-268.5 mm and a width of 232-232.5 mm, including a first pass rolling to obtain a billet with a height of 229-229.5 mm and a width of 240-240.5 mm, a second pass rolling to obtain a billet with a height of 203-203.5 mm and a width of 238-238.5 mm, a third pass rolling to obtain a billet with a height of 225-225.5 mm and a width of 206-206.5 mm, a fourth pass rolling to obtain a billet with a height of 196-196.5 mm and a width of 230-230.5 mm, and a fifth pass rolling to obtain a billet with a height of 202.5-202.7 mm and a width of 202.5-202.7 mm, and then the finished product is obtained after five passes of rolling.

Based on the abovementioned technical solutions, further, for the heat preservation process, the steel bar after rolling is subjected to heating preservation under conditions of a pit-entry temperature of the steel bar of greater than or equal to 550°C, a pit-exit temperature of the steel bar of less than or equal to 200 °C, and a holding time of greater than or equal to 48 h.

Based on the abovementioned technical solutions, further, the steel bar after heat preservation undergoes final finishing, inspection, packaging and warehousing, and delivery.

Based on the abovementioned technical solutions, further, the steel bar after heat preservation is subjected to heat treatment, including the following steps of:
1) Firstly quenching the steel bar under conditions of a temperature of 870-890°C for 0.8-1.0 h, followed by oil cooling the steel bar.
2) Secondly quenching the steel bar under conditions of a temperature of 770-790°C for 0.8-1.0 h, followed by oil cooling the steel bar.
3) Tempering the quenched steel bar under conditions of a temperature of 195-205°C for 1.8-2.2 h, followed by water cooling the steel bar.

Beneficial effects of the present invention are as follows:
(1) The present invention employs processes of converter smelting, LF refining, RH refining, continuous casting, and rolling to produce 20Cr2Ni4A steel bars for carburized gear shafts with a specification of Φ200 mm. The produced steel bars meet the requirements of mechanical property and purity.
2) The present invention ensures good surface quality and impact performance by means of optimized composition design and production process.
3) The finished steel products produced by the present invention meet the requirements for high-end products in terms of macrostructure, non-metallic inclusions and mechanical properties.

### DETAILED DESCRIPTION OF THE EMBODIMENTS

The following non-limiting embodiments may enable those ordinary skill in the art to more fully understand the present invention, but do not limit the present invention in any way.

### Embodiment 1

### 1. Composition optimization design

Chemical composition of a steel bar includes the following components in percentage by mass: 0.20% of C, 0.25% of Si, 0.53% of Mn, 0.010% of P, 0.005% of S, 1.38% of Cr, 3.35% of Ni, 0.01% of Cu, 0.02% of Mo, 0.028% of Alt, and the balance of Fe and inevitable impurities.

### 2. Production process and parameter design 20Cr2Ni4A steel for carburzied gear shafts by means of converter continuous casting

Process route: 180 t converter smelting-secondary refining (LF and RH)→ continuous casting to obtain a billet with a specification of 350mm*470mm-heating furnace heating-rolling-heat preservation→final finishing-inspection-packaging and warehousing-delivery.
(1) Converter smelting: 28% of scrap steel and 72% of melted iron by mass fraction was used as raw materials for smelting. Oxygen was introduced into converter to oxidize with the raw materials for oxidation with intense boiling. A tapping temperature was 1698°C. The C content of smelted liquid steel at tapping was 0.11% and the P content was 0.008%. Auxiliary materials and alloys were added to the liquid steel at one fourth of tapping. Moreover, alloy addition per ton of steel was as follows: 6.4 Kg/t of silicon manganese, 0.7 Kg/t of aluminum granules, 36 Kg/t of nickel plates, and 0.2 Kg/t of ferrosilicon. Auxiliary material addition per ton of steel is as follows: 29 Kg/t of dolomite, 34 Kg/t of lime, 18.5 Kg/t of limestone, and 6 Kg/t of sinter.
(2) LF refining: A high current of 22000 A was used to heat for slag smelting. When a slag surface in the LF fluctuates while the liquid steel and electric arc remained covered, active lime was supplemented to the liquid steel. After 5 min from addition of the active lime, a first liquid steel sample was taken for analyzing the chemical composition of the steel liquid, and alloys and fluorite were then supplemented to the liquid steel according to target values of the chemical composition. The alloy and fluorite were introduced to the argon stream to promote their rapid melting and homogenization. When a temperature of the liquid steel reached 1575 °C, 2 Kg of diffusion deoxidizer was added to per ton of steel for diffusion deoxygenation, and the door of the LF was closed for 10 min. When the temperature of liquid steel reached 1625 °C, the second liquid steel sample was taken for analyzing the chemical composition of the liquid steel to determine a deviation of each chemical element's content from the target value. After the second sample was taken away, 2 Kg of diffusion deoxidizer was supplemented to per ton of steel for continuous slag adjustment. Alloys was supplemented to the liquid steel with addition per ton of steel as follows: 7.6 Kg/t high-carbon ferrochrome, 18.7 Kg/t low-carbon ferrochrome, 1.6 Kg/t of aluminum granules, 1.38 Kg/t of ferrosilicon, and 2.0 Kg/t of nickel plates. A slag basicity at pH 2.8 and a slag viscosity at 1.10 Pa·s were maintained while white slag refining was continued for 25 min. When the temperature of the liquid steel reached 1634 °C, 0.9 m of aluminum wire was fed to per ton of steel for final deoxidation. Calm argon blowing was performed to the liquid steel for 14 min after the completion of wire feeding. Auxiliary materials were supplemented to the liquid steel with addition per ton of steel as follows: 8.8 Kg/t of active lime, and 0.77 Kg/t of fluorite.
(3) RH refining: An argon pressure in a ladle before a vacuum pump startup was controlled to be 0.1 MPa to ensure that the slag surface slightly fluctuates while the liquid steel remained covered. When a vacuum degree of a vacuum chamber reached 100 Pa, timing began for 12 min, and aluminum granules and high manganese were added to the liquid steel based on the composition of the liquid steel, while the argon pressure was adjusted to 0.35 MPa. 1.1 m of silicon-calcium alloy wire was added to per ton of steel after calm argon blowing.
(4) Continuous casting: a ladle temperature was 1548 °C, a tundish temperature was 1533 °C, a casting speed was 0.43 m/min, a hydrogen content in the liquid steel of the tundish was controlled at 1.6 ppm, an mold electromagnetic stirring current was 400 A, and a final electromagnetic stirring current was 330 A with a frequency of 8 Hz. A full protective pouring was adopted during the continuous casting, and a medium-carbon steel mold flux was used in mold. Soft reduction was applied to a cast strand at 2nd, 3rd and 4th reduction rolls with reduction amounts of 3 mm, 4 mm and 4 mm, respectively. The cast strand, which was still at red heat condition, was then cut by means of a combined automatic and manual method, and a cut billet was stacked with two furnaces of strands on its top to ensure flatness, and the holding time was 35 h.
(5) Heating: The temperature of the continuous casting billet entering the heating furnace was 510 °C, and a three-section heating method was adopted. A preheating section took 0.6 h to raise the temperature to 670 °C followed by holding for 0.4 h. A heating section 2 took 0.6 h to raise the temperature to 850 °C followed by holding for 0.7 h. A heating section 1 took 0.6 h to raise the temperature to 1220 °C followed by holding for 1.0 h. A soaking section took 0.4 h to reduce the temperature to 1200 °C followed by holding for 1.0 h. A tapping temperature was 1190 °C.
(6) Rolling process
   The initial rolling temperature was 1130 °C, and the final rolling temperature was 850 °C.
   1) Blooming process:
      A 1150 mm breakdown mill was adopted to perform 7 passes of rolling on the continuous casting billet after heating, with reduction amounts of 60 mm in a first pass rolling, 70 mm in a second pass rolling, 65 mm in a third pass rolling, 56 mm in a fourth pass rolling, 65 mm in a fifth pass rolling, 71 mm in a sixth pass rolling, and 71 mm in a seventh pass rolling, followed by making the billet pass through 3 stands of 850 mm rolling mill, 1 stand of 735 mm rolling mill, and an 8-stand continuous rolling mill unit for further rolling.
   2) Continuous rolling process to obtain a finished product with a specification of Φ200 mm:
      For a big steel bar with a specification of Φ200 mm, 5 passes of rolling was performed on a bloomed intermediate billet with a height of 268 mm and a width of 232 mm, including a first pass rolling to obtain a billet with a height of 229 mm and a width of 240 mm, a second pass rolling to obtain a billet with a height of 203 mm and a width of 238 mm, a third pass rolling to obtain a billet with a height of 225 mm and a width of 206 mm, a fourth pass rolling to obtain a billet with a height of 196 mm and a width of 230 mm, and a fifth pass rolling to obtain a billet with a height of 202.5 mm and a width of 202.5 mm, and then the finished product was obtained.
(7) Heat preservation process: The rolled steel bar after rolling was subjected to heating preservation under conditions of a pit-entry temperature of the steel bar of 580°C, a pit-exit temperature of the steel bar of 150 °C, and a holding time of 54 h.

### Embodiment 2

### 1. Composition optimization design

Chemical composition of a steel bar includes the following components in percentage by mass: 0.19% of C, 0.26% of Si, 0.55% of Mn, 0.007% of P, 0.004% of S, 1.39% of Cr, 3.37% of Ni, 0.01% of Cu, 0.01% of Mo, 0.028% of Alt, and the balance of Fe and inevitable impurities.

### 2. Production process and parameter design 20Cr2Ni4A steel for carburzied gear shafts by means of converter continuous casting

Process route: 180 t converter smelting→secondary refining (LF and RH)→ continuous casting to obtain a billet with a specification of 350mm*470mm-heating furnace heating-rolling-heat preservation→final finishing-inspection-packaging and warehousing-delivery.
(1) Converter smelting: 28% of scrap steel and 72% of melted iron by mass fraction was used as raw materials for smelting. Oxygen was introduced into converter to oxidize with the raw materials for oxidation with intense boiling. A tapping temperature was 1698°C. The C content of smelted liquid steel at tapping was 0.10% and the P content was 0.008%. Auxiliary materials and alloys were added to the liquid steel at one fourth of tapping. Moreover, alloy addition per ton of steel was as follows: 6.4 Kg/t of silicon manganese, 0.7 Kg/t of aluminum granules, 36 Kg/t of nickel plates, and 0.22 Kg/t of ferrosilicon. Auxiliary material addition per ton of steel is as follows: 29 Kg/t of dolomite, 34 Kg/t of lime, 18.5 Kg/t of limestone, and 6 Kg/t of sinter.
(2) LF refining: A high current of 23000 A was used to heat for slag smelting. When a slag surface in the LF fluctuates while the liquid steel and electric arc remained covered, active lime was supplemented to the liquid steel. After 5 min from addition of the active lime, a first liquid steel sample was taken for analyzing the chemical composition of the steel liquid, and alloys and fluorite were then supplemented to the liquid steel according to target values of the chemical composition. The alloy and fluorite were introduced to the argon stream to promote their rapid melting and homogenization. When a temperature of the liquid steel reached 1576 °C, 1.5 Kg of diffusion deoxidizer was added to per ton of steel for diffusion deoxygenation, and the door of the LF was closed for 10 min. When the temperature of liquid steel reached 1624 °C, the second liquid steel sample was taken for analyzing the chemical composition of the liquid steel to determine a deviation of each chemical element's content from the target value. After the second sample was taken away, 1.5 Kg of diffusion deoxidizer was supplemented to per ton of steel for continuous slag adjustment. Alloys was supplemented to the liquid steel with addition per ton of steel as follows: 7.6 Kg/t high-carbon ferrochrome, 18.8 Kg/t low-carbon ferrochrome, 1.65 Kg/t of aluminum granules, 1.38 Kg/t of ferrosilicon, and 1.95 Kg/t of nickel plates. A slag basicity at pH 2.8 and a slag viscosity at 0.95 Pa·s were maintained while white slag refining was continued for 27 min. When the temperature of the liquid steel reached 1635 °C, 0.9 m of aluminum wire was fed to per ton of steel for final deoxidation. Calm argon blowing was performed to the liquid steel for 16 min after the completion of wire feeding. Auxiliary materials were supplemented to the liquid steel with addition per ton of steel as follows: 8.8 Kg/t of active lime, and 0.77 Kg/t of fluorite.
(3) RH refining: An argon pressure in a ladle before a vacuum pump startup was controlled to be 0.15 MPa to ensure that the slag surface slightly fluctuates while the liquid steel remained covered. When a vacuum degree of a vacuum chamber reached 100 Pa, timing began for 12 min, and aluminum granules and high manganese were added to the liquid steel based on the composition of the liquid steel, while the argon pressure was adjusted to 0.4 MPa. 1.1 m of silicon-calcium alloy wire was added to per ton of steel after calm argon blowing.
(4) Continuous casting: a ladle temperature was 1548 °C, a tundish temperature was 1535 °C, a casting speed was 0.43 m/min, a hydrogen content in the liquid steel of the tundish was controlled at 1.6 ppm, an mold electromagnetic stirring current was 400 A, and a final electromagnetic stirring current was 330 A with a frequency of 8 Hz. A full protective pouring was adopted during the continuous casting, and a medium-carbon steel mold flux was used in mold. Soft reduction was applied to a cast strand at 2nd, 3rd and 4th reduction rolls with reduction amounts of 3 mm, 4 mm and 4 mm, respectively. The cast strand, which was still at red heat condition, was then cut by means of a combined automatic and manual method, and a cut billet was stacked with two furnaces of strands on its top to ensure flatness, and the holding time was 35 h.
(5) Heating: The temperature of the continuous casting billet entering the heating furnace was 390 °C, and a three-section heating method was adopted. A preheating section took 0.6 h to raise the temperature to 680 °C followed by holding for 0.4 h. A heating section 2 took 0.6 h to raise the temperature to 870 °C followed by holding for 0.6 h. A heating section 1 took 0.6 h to raise the temperature to 1220 °C followed by holding for 1.0 h. A soaking section took 0.3 h to reduce the temperature to 1210 °C followed by holding for 0.8 h. A tapping temperature was 1190 °C.
(6) Rolling process
   The initial rolling temperature was 1120 °C, and the final rolling temperature was 890 °C.
   1) Blooming process:
      A 1150 mm breakdown mill was adopted to perform 7 passes of rolling on the continuous casting billet after heating, with reduction amounts of 60 mm in a first pass rolling, 70 mm in a second pass rolling, 65 mm in a third pass rolling, 56 mm in a fourth pass rolling, 65 mm in a fifth pass rolling, 71 mm in a sixth pass rolling, and 71 mm in a seventh pass rolling, followed by making the billet pass through 3 stands of 850 mm rolling mill, 1 stand of 735 mm rolling mill, and an 8-stand continuous rolling mill unit for further rolling.
   2) Continuous rolling process to obtain a finished product with a specification of Φ200 mm:
      For a big steel bar with a specification of Φ200 mm, 5 passes of rolling was performed on a bloomed intermediate billet with a height of 268 mm and a width of 232 mm, including a first pass rolling to obtain a billet with a height of 229 mm and a width of 240 mm, a second pass rolling to obtain a billet with a height of 203 mm and a width of 238 mm, a third pass rolling to obtain a billet with a height of 225 mm and a width of 206 mm, a fourth pass rolling to obtain a billet with a height of 196 mm and a width of 230 mm, and a fifth pass rolling to obtain a billet with a height of 202.5 mm and a width of 202.5 mm, and then the finished product was obtained.
(7) Heat preservation process: The rolled steel bar after rolling was subjected to heating preservation under conditions of a pit-entry temperature of the steel bar of 570°C, a pit-exit temperature of the steel bar of 140 °C, and a holding time of 52 h.

### Embodiment 3

### 1. Composition optimization design

Chemical composition of a steel bar includes the following components in percentage by mass: 0.20% of C, 0.25% of Si, 0.54% of Mn, 0.008% of P, 0.004% of S, 1.39% of Cr, 3.38% of Ni, 0.02% of Cu, 0.01% of Mo, 0.028% of Alt, and the balance of Fe and inevitable impurities.

### 2. Production process and parameter design 20Cr2Ni4A steel for carburzied gear shafts by means of converter continuous casting

Process route: 180 t converter smelting-secondary refining (LF and RH)→ continuous casting to obtain a billet with a specification of 350mm*470mm-heating furnace heating-rolling-heat preservation→final finishing-inspection-packaging and warehousing-delivery.
(1) Converter smelting: 28% of scrap steel and 72% of melted iron by mass fraction was used as raw materials for smelting. Oxygen was introduced into converter to oxidize with the raw materials for oxidation with intense boiling. A tapping temperature was 1700°C. The C content of smelted liquid steel at tapping was 0.10% and the P content was 0.007%. Auxiliary materials and alloys were added to the liquid steel at one fourth of tapping. Moreover, alloy addition per ton of steel was as follows: 6.4 Kg/t of silicon manganese, 0.7 Kg/t of aluminum granules, 36 Kg/t of nickel plates, and 0.2 Kg/t of ferrosilicon. Auxiliary material addition per ton of steel is as follows: 30 Kg/t of dolomite, 34 Kg/t of lime, 18.6 Kg/t of limestone, and 6 Kg/t of sinter.
(2) LF refining: A high current of 22000 A was used to heat for slag smelting. When a slag surface in the LF fluctuates while the liquid steel and electric arc remained covered, active lime was supplemented to the liquid steel. After 5 min from addition of the active lime, a first liquid steel sample was taken for analyzing the chemical composition of the steel liquid, and alloys and fluorite were then supplemented to the liquid steel according to target values of the chemical composition. The alloy and fluorite were introduced to the argon stream to promote their rapid melting and homogenization. When a temperature of the liquid steel reached 1575 °C, 2 Kg of diffusion deoxidizer was added to per ton of steel for diffusion deoxygenation, and the door of the LF was closed for 10 min. When the temperature of liquid steel reached 1626 °C, the second liquid steel sample was taken for analyzing the chemical composition of the liquid steel to determine a deviation of each chemical element's content from the target value. After the second sample was taken away, diffusion deoxidizer was supplemented to per ton of steel for continuous slag adjustment. Alloys was supplemented to the liquid steel with addition per ton of steel as follows: 7.6 Kg/t high-carbon ferrochrome, 18.8 Kg/t low-carbon ferrochrome, 1.6 Kg/t of aluminum granules, 1.37 Kg/t of ferrosilicon, and 1.9 Kg/t of nickel plates. A slag basicity at pH 2.5 and a slag viscosity at 0.9 Pa·s were maintained while white slag refining was continued for 25 min. When the temperature of the liquid steel reached 1635 °C, 0.9 m of aluminum wire was fed to per ton of steel for final deoxidation. Calm argon blowing was performed to the liquid steel for 15 min after the completion of wire feeding. Auxiliary materials were supplemented to the liquid steel with addition per ton of steel as follows: 8.8 Kg/t of active lime, and 0.78 Kg/t of fluorite.
(3) RH refining: An argon pressure in a ladle before a vacuum pump startup was controlled to be 0.2 MPa to ensure that the slag surface slightly fluctuates while the liquid steel remained covered. When a vacuum degree of a vacuum chamber reached 100 Pa, timing began for 13 min, and aluminum granules and high manganese were added to the liquid steel based on the composition of the liquid steel, while the argon pressure was adjusted to 0.4 MPa. 1.1 m of silicon-calcium alloy wire was added to per ton of steel after calm argon blowing.
(4) Continuous casting: a ladle temperature was 1548 °C, a tundish temperature was 1535 °C, a casting speed was 0.43 m/min, a hydrogen content in the liquid steel of the tundish was controlled at 1.4 ppm, an mold electromagnetic stirring current was 400 A, and a final electromagnetic stirring current was 330 A with a frequency of 8 Hz. A full protective pouring was adopted during the continuous casting, and a medium-carbon steel mold flux was used in mold. Soft reduction was applied to a cast strand at 2nd, 3rd and 4th reduction rolls with reduction amounts of 3 mm, 4 mm and 4 mm, respectively. The cast strand, which was still at red heat condition, was then cut by means of a combined automatic and manual method, and a cut billet was stacked with two furnaces of strands on its top to ensure flatness, and the holding time was 35 h.
(5) Heating: The temperature of the continuous casting billet entering the heating furnace was 480 °C, and a three-section heating method was adopted. A preheating section took 0.6 h to raise the temperature to 670 °C followed by holding for 0.3 h. A heating section 2 took 0.6 h to raise the temperature to 860 °C followed by holding for 0.6 h. A heating section 1 took 0.6 h to raise the temperature to 1220 °C followed by holding for 1.0 h. A soaking section took 0.3 h to reduce the temperature to 1210 °C followed by holding for 0.8 h. A tapping temperature was 1190 °C.
(6) Rolling process
   The initial rolling temperature was 1120 °C, and the final rolling temperature was 885 °C.
   1) Blooming process:
      A 1150 mm breakdown mill was adopted to perform 7 passes of rolling on the continuous casting billet after heating, with reduction amounts of 60 mm in a first pass rolling, 70 mm in a second pass rolling, 65 mm in a third pass rolling, 56 mm in a fourth pass rolling, 65 mm in a fifth pass rolling, 71 mm in a sixth pass rolling, and 71 mm in a seventh pass rolling, followed by making the billet pass through 3 stands of 850 mm rolling mill, 1 stand of 735 mm rolling mill, and an 8-stand continuous rolling mill unit for further rolling.
   2) Continuous rolling process to obtain a finished product with a specification of Φ200 mm:
      For a big steel bar with a specification of Φ200 mm, 5 passes of rolling was performed on a bloomed intermediate billet with a height of 268 mm and a width of 232 mm, including a first pass rolling to obtain a billet with a height of 229 mm and a width of 240 mm, a second pass rolling to obtain a billet with a height of 203 mm and a width of 238 mm, a third pass rolling to obtain a billet with a height of 225 mm and a width of 206 mm, a fourth pass rolling to obtain a billet with a height of 196 mm and a width of 230 mm, and a fifth pass rolling to obtain a billet with a height of 202.5 mm and a width of 202.5 mm, and then the finished product was obtained.
(7) Heat preservation process: The rolled steel bar after rolling was subjected to heating preservation under conditions of a pit-entry temperature of the steel bar of 570°C, a pit-exit temperature of the steel bar of 160 °C, and a holding time of 55 h.

### Embodiment 4

### 1. Composition optimization design

Chemical composition of a steel bar includes the following components in percentage by mass: 0.20% of C, 0.26% of Si, 0.54% of Mn, 0.009% of P, 0.005% of S, 1.40% of Cr, 3.36% of Ni, 0.01% of Cu, 0.02% of Mo, 0.029% of Alt, and the balance of Fe and inevitable impurities.

### 2. Production process and parameter design 20Cr2Ni4A steel for carburzied gear shafts by means of converter continuous casting

Process route: 180 t converter smelting-secondary refining (LF and RH)→ continuous casting to obtain a billet with a specification of 350mm*470mm-heating furnace heating-rolling-heat preservation→final finishing-inspection-packaging and warehousing-delivery.
(1) Converter smelting: 29% of scrap steel and 71% of melted iron by mass fraction was used as raw materials for smelting. Oxygen was introduced into converter to oxidize with the raw materials for oxidation with intense boiling. A tapping temperature was 1698 °C. The C content of smelted liquid steel at tapping was 0.10 % and the P content was 0.008 %. Auxiliary materials and alloys were added to the liquid steel at one fourth of tapping. Moreover, alloy addition per ton of steel was as follows: 6.4 Kg/t of silicon manganese, 0.7 Kg/t of aluminum granules, 36 Kg/t of nickel plates, and 0.2 Kg/t of ferrosilicon. Auxiliary material addition per ton of steel is as follows: 29 Kg/t of dolomite, 34 Kg/t of lime, 18.5 Kg/t of limestone, and 6 Kg/t of sinter.
(2) LF refining: A high current of 23000 A was used to heat for slag smelting. When a slag surface in the LF fluctuates while the liquid steel and electric arc remained covered, active lime was supplemented to the liquid steel. After 5 min from addition of the active lime, a first liquid steel sample was taken for analyzing the chemical composition of the steel liquid, and alloys and fluorite were then supplemented to the liquid steel according to target values of the chemical composition. The alloy and fluorite were introduced to the argon stream to promote their rapid melting and homogenization. When a temperature of the liquid steel reached 1576 °C, 2 Kg of diffusion deoxidizer was added to per ton of steel for diffusion deoxygenation, and the door of the LF was closed for 10 min. When the temperature of liquid steel reached 1626 °C, the second liquid steel sample was taken for analyzing the chemical composition of the liquid steel to determine a deviation of each chemical element's content from the target value. After the second sample was taken away, 2 Kg/t of diffusion deoxidizer was supplemented to per ton of steel for continuous slag adjustment. Alloys was supplemented to the liquid steel with addition per ton of steel as follows: 7.6 Kg/t high-carbon ferrochrome, 18.8 Kg/t low-carbon ferrochrome, 1.6 Kg/t of aluminum granules, 1.37 Kg/t of ferrosilicon, and 1.9 Kg/t of nickel plates. A slag basicity at pH 2.5 and a slag viscosity at 0.9 Pa·s were maintained while white slag refining was continued for 25 min. When the temperature of the liquid steel reached 1634 °C, 0.9 m of aluminum wire was fed to per ton of steel for final deoxidation. Calm argon blowing was performed to the liquid steel for 15 min after the completion of wire feeding. Auxiliary materials were supplemented to the liquid steel with addition per ton of steel as follows: 8.8 Kg/t of active lime, and 0.77 Kg/t of fluorite.
(3) RH refining: An argon pressure in a ladle before a vacuum pump startup was controlled to be 0.15 MPa to ensure that the slag surface slightly fluctuates while the liquid steel remained covered. When a vacuum degree of a vacuum chamber reached 100 Pa, timing began for 12 min, and aluminum granules and high manganese were added to the liquid steel based on the composition of the liquid steel, while the argon pressure was adjusted to 0.4 MPa. 1.1 m of silicon-calcium alloy wire was added to per ton of steel after calm argon blowing.
(4) Continuous casting: a ladle temperature was 1548 °C, a tundish temperature was 1533 °C, a casting speed was 0.43 m/min, a hydrogen content in the liquid steel of the tundish was controlled at 1.6 ppm, an mold electromagnetic stirring current was 400 A, and a final electromagnetic stirring current was 330 A with a frequency of 8 Hz. A full protective pouring was adopted during the continuous casting, and a medium-carbon steel mold flux was used in mold. Soft reduction was applied to a cast strand at 2nd, 3rd and 4th reduction rolls with reduction amounts of 3 mm, 4 mm and 4 mm, respectively. The cast strand, which was still at red heat condition, was then cut by means of a combined automatic and manual method, and a cut billet was stacked with two furnaces of strands on its top to ensure flatness, and the holding time was 35 h.
(5) Heating: The temperature of the continuous casting billet entering the heating furnace was 450 °C, and a three-section heating method was adopted. A preheating section took 0.6 h to raise the temperature to 670 °C followed by holding for 0.3 h. A heating section 2 took 0.6 h to raise the temperature to 850 °C followed by holding for 0.7 h. A heating section 1 took 0.6 h to raise the temperature to 1220 °C followed by holding for 1.0 h. A soaking section took 0.3 h to reduce the temperature to 1210 °C followed by holding for 0.8 h. A tapping temperature was 1190 °C.
(6) Rolling process
   The initial rolling temperature was 1130 °C, and the final rolling temperature was 885 °C.
   1) Blooming process:
      A 1150 mm breakdown mill was adopted to perform 7 passes of rolling on the continuous casting billet after heating, with reduction amounts of 60 mm in a first pass rolling, 70 mm in a second pass rolling, 65 mm in a third pass rolling, 56 mm in a fourth pass rolling, 65 mm in a fifth pass rolling, 71 mm in a sixth pass rolling, and 71 mm in a seventh pass rolling, followed by making the billet pass through 3 stands of 850 mm rolling mill, 1 stand of 735 mm rolling mill, and an 8-stand continuous rolling mill unit for further rolling.
   2) Continuous rolling process to obtain a finished product with a specification of Φ200 mm:
      For a big steel bar with a specification of Φ200 mm, 5 passes of rolling was performed on a bloomed intermediate billet with a height of 268 mm and a width of 232 mm, including a first pass rolling to obtain a billet with a height of 229 mm and a width of 240 mm, a second pass rolling to obtain a billet with a height of 203 mm and a width of 238 mm, a third pass rolling to obtain a billet with a height of 225 mm and a width of 206 mm, a fourth pass rolling to obtain a billet with a height of 196 mm and a width of 230 mm, and a fifth pass rolling to obtain a billet with a height of 202.5 mm and a width of 202.5 mm, and then the finished product was obtained.
(7) Heat preservation process: The rolled steel bar after rolling was subjected to heating preservation under conditions of a pit-entry temperature of the steel bar of 580°C, a pit-exit temperature of the steel bar of 160 °C, and a holding time of 54 h.

### Embodiment 5

### 1. Composition optimization design

Chemical composition of a steel bar includes the following components in percentage by mass: 0.21% of C, 0.26% of Si, 0.53% of Mn, 0.009% of P, 0.005% of S, 1.38% of Cr, 3.36% of Ni, 0.01% of Cu, 0.02% of Mo, 0.029% of Alt, and the balance of Fe and inevitable impurities.

### 2. Production process and parameter design 20Cr2Ni4A steel for carburzied gear shafts by means of converter continuous casting

Process route: 180 t converter smelting-secondary refining (LF and RH)→ continuous casting to obtain a billet with a specification of 350mm*470mm-heating furnace heating-rolling-heat preservation→final finishing-inspection-packaging and warehousing→delivery.
(1) Converter smelting: 28% of scrap steel and 72% of melted iron by mass fraction was used as raw materials for smelting. Oxygen was introduced into converter to oxidize with the raw materials for oxidation with intense boiling. A tapping temperature was 1690 °C. The C content of smelted liquid steel at tapping was 0.10 % and the P content was 0.007 %. Auxiliary materials and alloys were added to the liquid steel at one fourth of tapping. Moreover, alloy addition per ton of steel was as follows: 6.4 Kg/t of silicon manganese, 0.7 Kg/t of aluminum granules, 36 Kg/t of nickel plates, and 0.22 Kg/t of ferrosilicon. Auxiliary material addition per ton of steel is as follows: 29 Kg/t of dolomite, 34 Kg/t of lime, 18.6 Kg/t of limestone, and 6 Kg/t of sinter.
(2) LF refining: A high current of 22000 A was used to heat for slag smelting. When a slag surface in the LF fluctuates while the liquid steel and electric arc remained covered, active lime was supplemented to the liquid steel. After 5 min from addition of the active lime, a first liquid steel sample was taken for analyzing the chemical composition of the steel liquid, and alloys and fluorite were then supplemented to the liquid steel according to target values of the chemical composition. The alloy and fluorite were introduced to the argon stream to promote their rapid melting and homogenization. When a temperature of the liquid steel reached 1575 °C, 2 Kg of diffusion deoxidizer was added to per ton of steel for diffusion deoxygenation, and the door of the LF was closed for 10 min. When the temperature of liquid steel reached 1625 °C, the second liquid steel sample was taken for analyzing the chemical composition of the liquid steel to determine a deviation of each chemical element's content from the target value. After the second sample was taken away, 2 Kg/t of diffusion deoxidizer was supplemented to per ton of steel for continuous slag adjustment. Alloys was supplemented to the liquid steel with addition per ton of steel as follows: 7.6 Kg/t high-carbon ferrochrome, 18.7 Kg/t low-carbon ferrochrome, 1.6 Kg/t of aluminum granules, 1.38 Kg/t of ferrosilicon, and 20. Kg/t of nickel plates. A slag basicity at pH 2.6 and a slag viscosity at 0.92 Pa·s were maintained while white slag refining was continued for 27 min. When the temperature of the liquid steel reached 1635 °C, 0.9 m of aluminum wire was fed to per ton of steel for final deoxidation. Calm argon blowing was performed to the liquid steel for 15 min after the completion of wire feeding. Auxiliary materials were supplemented to the liquid steel with addition per ton of steel as follows: 8.8 Kg/t of active lime, and 0.78 Kg/t of fluorite.
(3) RH refining: An argon pressure in a ladle before a vacuum pump startup was controlled to be 0.1 MPa to ensure that the slag surface slightly fluctuates while the liquid steel remained covered. When a vacuum degree of a vacuum chamber reached 100 Pa, timing began for 13 min, and aluminum granules and high manganese were added to the liquid steel based on the composition of the liquid steel, while the argon pressure was adjusted to 0.35 MPa. 1.1 m of silicon-calcium alloy wire was added to per ton of steel after calm argon blowing.
(4) Continuous casting: a ladle temperature was 1548 °C, a tundish temperature was 1533 °C, a casting speed was 0.43 m/min, a hydrogen content in the liquid steel of the tundish was controlled at 1.4 ppm, an mold electromagnetic stirring current was 400 A, and a final electromagnetic stirring current was 330 A with a frequency of 8 Hz. A full protective pouring was adopted during the continuous casting, and a medium-carbon steel mold flux was used in mold. Soft reduction was applied to a cast strand at 2nd, 3rd and 4th reduction rolls with reduction amounts of 3 mm, 4 mm and 4 mm, respectively. The cast strand, which was still at red heat condition, was then cut by means of a combined automatic and manual method, and a cut billet was stacked with two furnaces of strands on its top to ensure flatness, and the holding time was 35 h.
(5) Heating: The temperature of the continuous casting billet entering the heating furnace was 480 °C, and a three-section heating method was adopted. A preheating section took 0.6 h to raise the temperature to 680 °C followed by holding for 0.4 h. A heating section 2 took 0.6 h to raise the temperature to 860 °C followed by holding for 0.6 h. A heating section 1 took 0.6 h to raise the temperature to 1220 °C followed by holding for 1.0 h. A soaking section took 0.4 h to reduce the temperature to 1210 °C followed by holding for 1.0 h. A tapping temperature was 1190 °C.
(6) Rolling process
   The initial rolling temperature was 1125 °C, and the final rolling temperature was 880 °C.
   1) Blooming process:
      A 1150 mm breakdown mill was adopted to perform 7 passes of rolling on the continuous casting billet after heating, with reduction amounts of 60 mm in a first pass rolling, 70 mm in a second pass rolling, 65 mm in a third pass rolling, 56 mm in a fourth pass rolling, 65 mm in a fifth pass rolling, 71 mm in a sixth pass rolling, and 71 mm in a seventh pass rolling, followed by making the billet pass through 3 stands of 850 mm rolling mill, 1 stand of 735 mm rolling mill, and an 8-stand continuous rolling mill unit for further rolling.
   2) Continuous rolling process to obtain a finished product with a specification of Φ200 mm:
      For a big steel bar with a specification of Φ200 mm, 5 passes of rolling was performed on a bloomed intermediate billet with a height of 268 mm and a width of 232 mm, including a first pass rolling to obtain a billet with a height of 229 mm and a width of 240 mm, a second pass rolling to obtain a billet with a height of 203 mm and a width of 238 mm, a third pass rolling to obtain a billet with a height of 225 mm and a width of 206 mm, a fourth pass rolling to obtain a billet with a height of 196 mm and a width of 230 mm, and a fifth pass rolling to obtain a billet with a height of 202.5 mm and a width of 202.5 mm, and then the finished product was obtained.
(7) Heat preservation process: The rolled steel bar after rolling was subjected to heating preservation under conditions of a pit-entry temperature of the steel bar of 570°C, a pit-exit temperature of the steel bar of 150 °C, and a holding time of 55 h.

### Test results of finished products in Embodiments 1-5

(1) Macrostructure of steels with a specification of Φ180 mm

| Serial No. | General Porosity | Centre Porosity | Ingot Pattern Segregation | Spotted Segregation | Edge Spotted Segregation |
|---|---|---|---|---|---|
| Standard | ≤1.0 | ≤1.0 | ≤1.0 | ≤0.5 | ≤0.5 |
| Embodiment1 | 0.5 | 0.5 | 0.5 | 0 | 0 |
| Embodiment1 | 0.5 | 0.5 | 0.5 | 0 | 0 |
| Embodiment2 | 0.5 | 0.5 | 0.5 | 0 | 0 |
| Embodiment2 | 0.5 | 0.5 | 0.5 | 0 | 0 |
| Embodiment3 | 0.5 | 0.5 | 0.5 | 0 | 0 |
| Embodiment3 | 0.5 | 0.5 | 0.5 | 0 | 0 |
| Embodiment4 | 0.5 | 0.5 | 0.5 | 0 | 0 |
| Embodiment4 | 0.5 | 0.5 | 0.5 | 0 | 0 |
| Embodiment5 | 0.5 | 0.5 | 0.5 | 0 | 0 |
| Embodiment5 | 0.5 | 0.5 | 0.5 | 0 | 0 |

(2) Non-metallic inclusions of steels with a specification of Φ200 mm

| Category | Class A | | Class B | | Class C | | Class D | | DS |
|---|---|---|---|---|---|---|---|---|---|
| | Fine | Coarse | Fine | Coarse | Fine | Coarse | Fine | Coarse | |
| Grade, No more than | 1.0 | 1.0 | 0.5 | 0.5 | 0.5 | 0.5 | 0.5 | 0.5 | 0.5 |
| Embodiment1 | 0.5 | 0.5 | 0 | 0 | 0 | 0 | 0 | 0 | 0 |
| Embodiment1 | 0.5 | 0.5 | 0 | 0 | 0 | 0 | 0 | 0 | 0 |
| Embodiment2 | 0.5 | 0.5 | 0 | 0 | 0 | 0 | 0 | 0 | 0 |
| Embodiment2 | 0.5 | 0.5 | 0 | 0 | 0 | 0 | 0 | 0 | 0 |
| Embodiment3 | 0.5 | 0.5 | 0 | 0 | 0 | 0 | 0 | 0 | 0 |
| Embodiment3 | 0.5 | 0.5 | 0 | 0 | 0 | 0 | 0 | 0 | 0 |
| Embodiment4 | 0.5 | 0.5 | 0 | 0 | 0 | 0 | 0 | 0 | 0 |
| Embodiment4 | 0.5 | 0.5 | 0 | 0 | 0 | 0 | 0 | 0 | 0 |
| Embodiment5 | 0.5 | 0.5 | 0 | 0 | 0 | 0 | 0 | 0 | 0 |
| Embodiment5 | 0.5 | 0.5 | 0 | 0 | 0 | 0 | 0 | 0 | 0 |

(3) Impact performance of steel with a specification of Φ200 mm

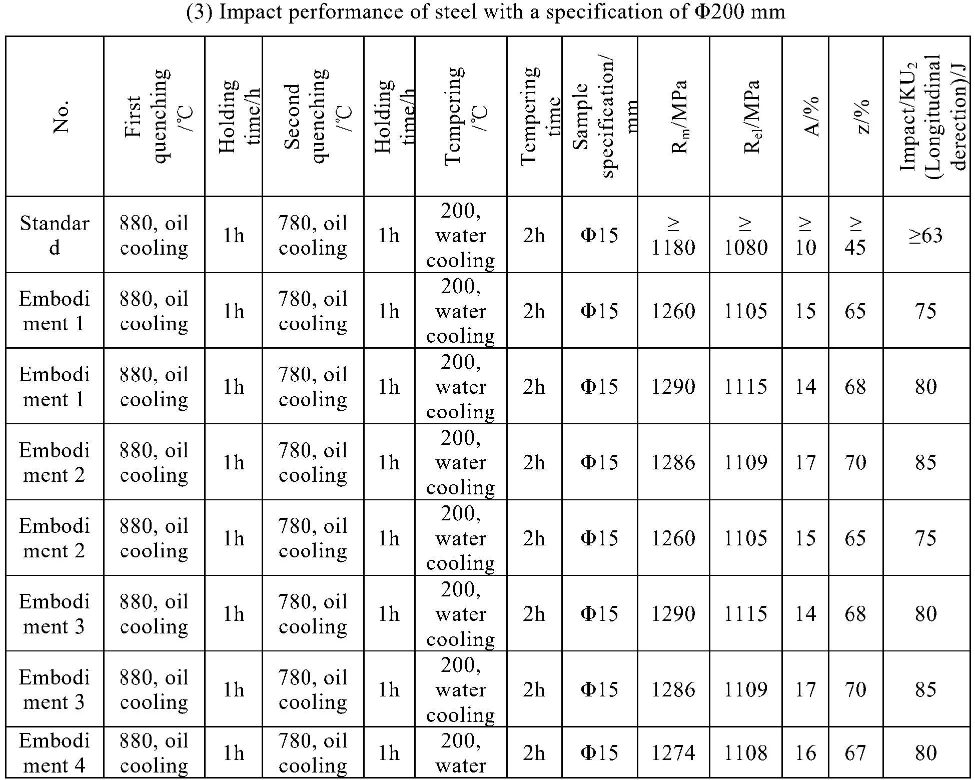

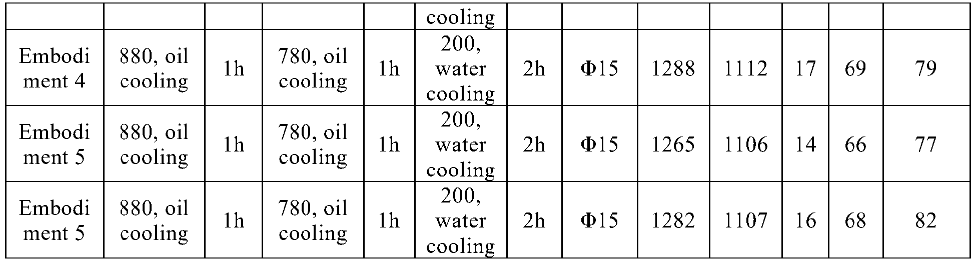

Any one skilled in the art may make many variations and modifications to the technical solution of the invention, or amend it into equivalent embodiments with equivalent changes using the approaches and technical content disclosed above, without departing from the scope of the technical solution of the invention. Therefore, all the content not departing from the technical solution of the invention, and any simple amendments, equivalent changes and modifications to the previous embodiments according to the technical essence of the invention, fall within the protective scope of the technical solution of the invention.

## Claims

1. A carburized gear shaft bar, comprising following chemical components in percentage by mass: 0.18-0.22% of C, 0.20-0.30% of Si, 0.50-0.60% of Mn, less than or equal to 0.015% of P, less than or equal to 0.008% of S, 1.35-1.45% of Cr, 3.30-3.40% of Ni, less than or equal to 0.05% of Cu, less than or equal to 0.05% of Mo, 0.025-0.035% of Alt, and the balance of Fe and inevitable impurities.

2. A method for preparing the carburized gear shaft bar according to claim 1, comprising processes of converter smelting, LF and RH secondary refining, continuous casting, heating, rolling, and heat preservation; wherein,
the converter smelting uses 27-30% of scrap steel and 70-73% of melted iron by mass fraction as raw materials for smelting, and oxygen is introduced into converter to react with the raw materials for oxidation with intense boiling, wherein a tapping temperature is 1695-1700 °C, a C content of a smelted liquid steel at tapping is 0.10-0.12% and a P content is less than or equal to 0.010%, auxiliary materials and alloys are added into the liquid steel between one fourth and one third of the tapping; alloy addition per ton of steel is as follows: 6.4-6.5 kg/t of siliconmanganese, 0.7-0.8kg/t of aluminum granules, 36-36.5 kg/t of nickel plates, and 0.2-0.22 kg/t of ferrosilicon; and auxiliary material addition per ton of steel is as follows: 29-30 kg/t of dolomite, 34-35 kg/t of lime, 18.2-19 kg/t of limestone, and 6-6.2 kg/t of sinter;
the LF refining adopts a high current of 20000-25000 A to heat for slag smelting, when a slag surface in the LF fluctuates while the liquid steel and electric arc remain covered, active lime is supplemented to the liquid steel; after 5 min from addition of active lime, a first liquid steel sample is taken for analyzing the chemical composition of the steel liquid, and alloys and fluorite are then supplemented to the liquid steel according to the target values of the chemical composition; when a temperature of the liquid steel reaches 1570-1580°C, 1-3kg of diffusion deoxidizer per ton of steel is added to the liquid steel for diffusion deoxygenation, and the door of the LF is closed for 10 min;, when the temperature of the liquid steel reaches 1620-1630 °C, a second liquid steel sample is taken for analyzing the chemical composition of the liquid steel to determine a deviation of each chemical element's content from the target value; after the second sample is taken away, 1-3 kg of diffusion deoxidizer is supplemented to per ton of steel for continuous slag adjustment; wherein supplemented alloy addition per ton of steel is as follows: 7.5-7.7 kg/t high-carbon ferrochrome, 18.7-19 kg/t low-carbon ferrochrome, 1.6-1.7 kg/t of aluminum granules, 1.35-1.42 kg/t of ferrosilicon, and 1.9-2.0 kg/t of nickel plates; maintain a slag basicity at pH 2.5-3.5 and a slag viscosity at 0.80-1.20 Pa·s while maintain white slag refining for 20-30 min; when the temperature of the liquid steel reaches 1630-1640 °C, 0.9-1.0 m of aluminum wire is fed to per ton of steel for final deoxidation, and then calm argon blowing is performed for 10-20 min after the completion of wire feeding; and supplemented auxiliary material addition per ton of steel is as follows: 8.7-9 kg/t of active lime, and 0.75-0.80 kg/t of fluorite;
for the RH refining, an argon pressure in a ladle before a vacuum pump startup is controlled to be 0.1-0.3 MPa to ensure that the slag surface slightly fluctuates while the liquid steel remains covered; when a vacuum degree of a vacuum chamber reaches 100-110 Pa, timing begins for 10-15min, add aluminum granules and high manganese to the liquid steel based on composition of the liquid steel and the target requirement, while the argon pressure is adjusted to 0.3-0.5 MPa, and then 1.1-1.2 m of silicon-calcium wire is added to per ton of steel after calm argon blowing;
for the continuous casting, a ladle temperature is 1545-1555 °C, a tundish temperature is 1530-1540 °C, a casting speed is 0.43-0.44 m/min, a hydrogen content in the liquid steel of the tundish is controlled to be less than or equal to 2 ppm, an mold electromagnetic stirring current is 400-420 A, and a final electromagnetic stirring current is 330-350 A with a frequency of 8-9 Hz; a full protective pouring is adopted during the continuous casting, and a medium-carbon steel mold flux is used in the mold; soft reduction is applied to a cast strand at 2nd, 3rd and 4th reduction rolls with reduction amounts of 3-3.2mm, 4-4.2mm and 4-4.2mm, respectively; then the cast strand is cut by means of a combined automatic and manual method, and a cut billet is stacked with hot-steels at the bottom and two furnaces of billets on top to ensure flatness, followed by insulation for 30-40 h.

3. The method according to claim 2, wherein, for the heating process, the temperature of a continuous casting billet entering the heating furnace is 300-540 °C, and a three-heating method is adopted, wherein a preheating section takes 0.6-0.8 h to raise the temperature to 650-700 °C followed by holding for 0.3-0.5 h, a heating section 2 takes 0.6-0.8 h to raise the temperature to 850-870 °C followed by holding for 0.5-0.8 h, a heating section 1 takes 0.6-0.8 h to raise the temperature to 1210-1240 °C followed by holding for 1.0-1.2 h, and a soaking section takes 0.3-0.5 h to reduce the temperature to 1200-1230 °C followed by holding for 0.8-1.0 h, and a tapping temperature is 1180-1210 °C.

4. The method according to claim 2, wherein, a production specification of the bar is Φ35-Φ250 mm.

5. The method according to claim 4, wherein, when a specification of a hot-rolled bar is greater than or equal to Φ83 mm, an initial rolling temperature is 1100-1200 °C, and a final rolling temperature is greater than or equal to 850 °C; and
when the specification of the hot-rolled bar is less than or equal to Φ82 mm, the initial rolling temperature is 980-1050 °C, and the final rolling temperature is 800-950 °C.

6. The method according to claim 2, wherein the rolling process comprises:
a blooming process, adopting a breakdown blooming mill to preform 7 passes of rolling on a continuous casting billet after heating, with reduction amounts of 60-61 mm in a first pass rolling, 70-71 mm in a second pass rolling, 65-66 mm in a third pass rolling, 56-57 mm in a fourth pass rolling, 65-66 mm in a fifth pass rolling, 71-72 mm in a sixth pass rolling, and 71-72 mm in a seventh pass rolling, followed by making the billet pass through three stands of 850 mm rolling mill, one stand of 735 mm rolling mill, and an 8-stand continuous rolling mill unit for further rolling; and
a rolling process to obtain a steel bar, involving rolling on a bloomed intermediate billet with a height of 268-268.5 mm and a width of 232-232.5 mm, comprising a first pass rolling to obtain a billet with a height of 229-229.5 mm and a width of 240-240.5 mm, a second pass rolling to obtain a billet with a height of 203-203.5 mm and a width of 238-238.5 mm, a third pass rolling to obtain a billet with a height of 225-225.5 mm and a width of 206-206.5 mm, a fourth pass rolling to obtain a billet with a height of 196-196.5 mm and a width of 230-230.5 mm, and a fifth pass rolling to obtain a billet with a height of 202.5-202.7 mm and a width of 202.5-202.7 mm, and then obtaining the finished product after four passes of rolling.

7. The preparation method according to claim 2, wherein for the heat preservation process, the steel bar after rolling is subjected to heat preservation under conditions of a pit-entry temperature of the steel bar of greater than or equal to 550 °C, a pit-exit temperature of the steel bar of less than or equal to 200 °C, and a holding time of greater than or equal to 48 h.

8. The preparation method according to claim 2, wherein the steel bar after heat preservation is subjected to heat treatment, comprising the following steps of:
1) firstly quenching the steel bar under conditions of a temperature of 870-890°C for 0.8-1.0 h, followed by oil cooling the steel bar;
2) secondly quenching the steel bar under conditions of a temperature of 770-790°C for 0.8-1.0 h, followed by oil cooling the steel bar; and
3) tempering the quenched steel bar under conditions of a temperature of 195-205°C for 1.8-2.2 h, followed by water cooling the steel bar.
